# EUROPÄISCHE PATENTSCHRIFT

(11) **EP 3 265 739 B1**
(45) Veröffentlichungstag und Bekanntmachung des Hinweises auf die Patenterteilung: **23.01.2019**
(21) Anmeldenummer: 16708938.2
(22) Anmeldetag: 03.03.2016
(51) Int. Cl.: F28F 3/02, B29C 67/00, F28D 9/00, B22F 3/105, B22F 5/10, B22F 3/10, B33Y 80/00

(54) **3D-GEDRUCKTES HEIZFLÄCHENELEMENT FÜR EINEN PLATTENWÄRMEÜBERTRAGER**
3D PRINTED HEATING SURFACE ELEMENT FOR A PLATE HEAT EXCHANGER
ÉLÉMENT CHAUFFANT IMPRIMÉ EN 3D POUR UN ÉCHANGEUR DE CHALEUR À PLAQUES

(30) Priorität: 05.03.2015 EP 15000638
(43) Veröffentlichungstag der Anmeldung: 10.01.2018
(73) Patentinhaber: Linde Aktiengesellschaft, 80331 München (DE)
(72) Erfinder: DIETRICH, Jörg, 83533 Edling (DE)
(74) Vertreter: Meilinger, Claudia Sabine
(86) Internationale Anmeldenummer: PCT/EP2016/000375
(87) Internationale Veröffentlichungsnummer: WO 2016/138997

(56) Entgegenhaltungen:
- RU-C1- 2 535 187
- US-A1- 2012 061 065
- US-A1- 2014 246 183

## Beschreibung

Die Erfindung betrifft einen Plattenwärmeübertrager mit einem Heizflächenelement, das durch 3D-Drucken hergestellt ist, sowie ferner ein Verfahren zur Herstellung eines derartigen Plattenwärmeübertragers.

Aus dem Stand der Technik sind Plattenwärmeübertrager bekannt, welche dazu eingerichtet sind, die Wärme von einem ersten Fluid indirekt auf ein anderes, zweites Fluid zu übertragen. Dabei werden die Fluide im Plattenwärmeübertrager in separaten Wärmeaustauschpassagen geführt.

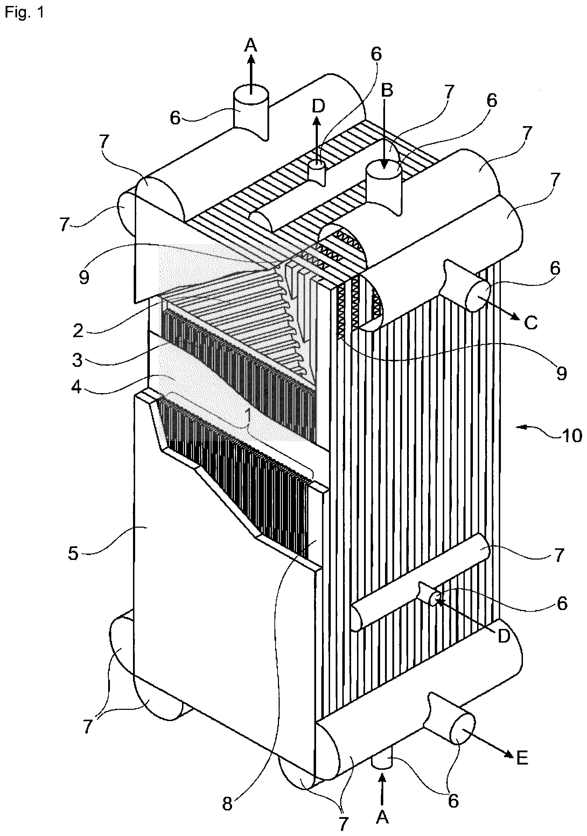

Ein derartiger Wärmeübertrager ist beispielsweise in der US 2014/02461983 A1 beschrieben. Dieser weist eine erste Strömungsplatte 150 und eine zweite Strömungsplatte 151 (Fig. 1) auf. Die erste Strömungsplatte 150 umfasst einen ersten Strömungsabschnitt, in welchem Gas in eine erste Richtung strömt, und einen zweiten Strömungsabschnitt, in welchem Gas in eine zweite Richtung strömt, wobei die zweite Strömungsrichtung nicht parallel zu der ersten Strömungsrichtung verläuft. Die erste Strömungsplatte ist derart an die zweite Strömungsplatte gekoppelt, dass eine Wärmeübertragungspassage gebildet wird, durch die ein Wärmeübertragungsmedium strömen kann. Die Kanäle in den Strömungsplatten können durch elektrochemisches Ätzen, chemisches Ätzen, Gießen, Elektroplattierung - LIGA, Mikromaterialbearbeitung, Gasphasenätzen, Oberflächen-Mikromaterialbearbeitung oder Stereolithographie gebildet sein US 2014/02461983 A1 beschreibt den Oberbegriff des Anspruchs 1.

Weitere Plattenwärmeübertrager sind z.B. in "The standards of the brazed aluminium plate-fin heat exchanger manufacturer association" ALPEMA, Third Edition, 2010 auf Seite 5 gezeigt und beschrieben. Eine daraus entnommene Abbildung ist in der Fig. 1 als Stand der Technik dargestellt und wird im Folgenden beschrieben. Der dort gezeigte Plattenwärmeübertrager umfasst mehrere parallel zueinander angeordnete Trennwände in Form von Trennblechen 4, die eine Vielzahl von Wärmeaustauschpassagen 1 für die miteinander in indirekte Wärmeübertragung zu bringenden Fluide A, B, C, D, E bilden. Der Wärmeaustausch zwischen den am Wärmeaustausch teilnehmenden Fluiden findet dabei zwischen benachbarten Wärmeaustauschpassagen 1 statt, wobei die Wärmeaustauschpassagen 1 und somit die Fluide durch die Trennbleche 4 voneinander getrennt sind. Der Wärmeaustausch erfolgt mittels Wärmeübertragung über die Trennbleche 4 sowie die zwischen den Trennblechen angeordneten Heizflächenelemente (Fins) 3. Die Wärmeaustauschpassagen 1 sind durch bündig am Rand der Trennbleche 4 angebrachte Seitenleisten in Form von Blechstreifen 8, im Weiteren auch als Sidebars 8 bezeichnet, nach außen abgeschlossen. Innerhalb der Wärmeaustauschpassagen 1 bzw. zwischen je zwei Trennplatten 4 sind die gewellten (im Querschnitt meanderförmigen) Fins 3 angeordnet. Die Trennbleche 4, Fins 3 und Sidebars 8 sind fest miteinander verbunden und bilden somit einen kompakten Plattenwärmeübertrager 10 beziehungsweise Wärmetauscherblock. Der gesamte Plattenwärmeübertrager 10 ist durch zwei äußerste Deckwände in Form von Deckblechen 5 nach außen begrenzt. Die beiden Deckwände 5 werden dabei jeweils durch eine äußerste Trennwand des Plattenwärmeübertragers 10 gebildet.

Zur Zu- und Abführung der wärmeaustauschenden Fluide sind über Eintritts- und Austrittsöffnungen 9 der Wärmeaustauschpassagen 1 halbzylinderförmige Sammler 7 mit Stutzen 6 angebracht, die zum Anschluss von zu- und abführenden Rohrleitungen dienen. Die Sammler 7 werden auch als Header 7 bezeichnet. Die Ein-und Austrittsöffnungen 9 der Wärmeaustauschpassagen 1 sind durch sogenannte Verteilerlamellen bzw. Verteilerfins 2 gebildet, die für eine gleichmäßige Verteilung der Fluide auf die einzelnen Wärmeaustauschpassagen 1 sorgen. Die Fluide strömen in den durch die Fins 3 und die Trennbleche 4 gebildeten Kanälen durch die Wärmeaustauschpassagen 1.

Nach dem Stand der Technik weisen die besagten Heizflächenelemente bzw. Fins 3 eine wellenförmige Struktur mit alternierenden Wellentälern und Wellenbergen auf, wobei je ein Wellental mit einem darauf folgenden Wellenberg über eine Flanke des betreffenden Heizflächenelementes verbunden ist, so dass sich die wellenförmige Struktur ergibt. Durch die wellenförmige Struktur werden - zusammen mit den beidseitigen Trennwänden - die Kanäle zur Führung des Fluides in der jeweiligen Wärmeaustauschpassage 1 gebildet.

Die Wellenberge und Wellentäler der wellenförmigen Struktur sind mit den jeweils benachbarten Trennblechen verbunden. Die am Wärmeaustausch teilnehmenden Fluide sind somit im direkten Wärmekontakt mit den wellenförmigen Strukturen, so dass der Wärmeübergang durch den thermischen Kontakt zwischen den Wellenbergen bzw. Wellentälern und Trennblechen gewährleistet ist. Zur Optimierung der Wärmeübertragung wird die Ausrichtung der wellenförmigen Struktur in Abhängigkeit vom Anwendungsfall so gewählt, dass eine Gleich-, Kreuz-, Gegen- oder Kreuz-Gegenströmung zwischen benachbarten Passagen ermöglicht wird.

Die wellenförmigen Strukturen der Fins innerhalb der Wärmeaustauschpassagen erfüllen drei Aufgaben. Zum einen wird durch den thermischen Kontakt zwischen der wellenförmigen Struktur bzw. dem Fin und dem jeweiligen Trennblech der Wärmeaustausch zwischen zwei Fluiden in benachbarten Wärmeaustauschpassagen gewährleistet. Zum anderen stellen die wellenförmigen Strukturen die Verbindung zu den Trennwänden her. Zum dritten dienen die Flanken der wellenförmigen Struktur zur Einleitung der durch den Innendruck entstehenden Kräfte in die Verbindung zwischen Wellenberg, Lot und Trennblech bzw. zwischen Wellental, Lot und Trennblech.

Derartige Plattenwärmetauscher sind vorzugsweise aus Aluminium gebildet, wobei die Bauteile durch Hartlöten miteinander verbunden werden. Die mit Lot versehenen Heizflächenelemente (Fins) 3, Trennbleche 4, Verteilerfins 2, Deckbleche 5 und Sidebars 8 werden aufeinander gestapelt und anschließend in einem Ofen zu einem Wärmetauscherblock hartgelötet. Auf den Wärmetauscherblock werden anschließend die Header 7 mit Stutzen 6 aufgeschweißt.

Die Heizflächenelemente oder Fins 3 sind also an ihren durch die Wellenberge bzw. Wellentäler gebildeten Kontaktstellen mit den Trennblechen 4 verlötet, wodurch ein intensiver Wärmeleitkontakt zwischen den Fins 3 und den Trennblechen 4 hergestellt ist. Dadurch wird der Wärmeaustausch zwischen den verschiedenen Fluiden verbessert, die alternierend in benachbarten Wärmeaustauschpassagen 1 strömen.

Durch dieses Herstellungsverfahren wird durch die Größe und Geometrie des Lötofens natürlich auch die maximale Größe eines derartigen Wärmetauscherblocks vorgegeben.

Weiterhin werden nach dem Stand der Technik die Heizflächenelemente oder Fins 3 in der Regel aus dünnen Blechen hergestellt, welche mit einer Presse oder anderen zur Verformung geeigneten Werkzeugen zu wellenförmigen Strukturen gefaltet werden. Durch die bei dem jeweiligen Umformprozess einzuhaltenden Randbedingungen, wie Radien am Übergang zwischen Wellenberg bzw. Wellental und Flanke, und die beim Umformprozess auftretenden Toleranzen hinsichtlich der zu erreichenden Idealform ist die mechanische Festigkeit des resultierenden Plattenwärmeübertragers begrenzt, was Probleme bei einer Anwendung mit Medien unter hohen Drücken und/oder hohen Temperaturen bereitet.

Weiterhin ist bei derartigen Umformprozessen die Geometrie des herzustellenden Fins im Wesentlichen vorbestimmt durch die zur Verfügung stehenden Pressenwerkzeuge. Bei der Herstellung von Plattenwärmeübertragern sind daher die möglichen Formen der zur Verfügung stehenden Fins deutlich limitiert, so dass oftmals die verfahrenstechnischen, hydraulischen oder statischen Anforderungen nicht vollständig bzw. im eigentlich gewünschten Maße erfüllt werden können. Insbesondere können bei den genannten Umformverfahren für Fins regelmäßig keine beliebigen Hinterschneidungen hergestellt werden, insbesondere keine Hinterschneidungen, die quer zur Pressrichtung verlaufen.

Hiervon ausgehend liegt der vorliegenden Erfindung die Aufgabe zugrunde, einen Plattenwärmeübertrager sowie ein entsprechendes Verfahren zur Herstellung eines derartigen Plattenwärmeübertrages bereitzustellen, die eine flexiblere Gestaltung der Heizflächenelemente ermöglichen und optimiert sind bezüglich der Festigkeit und der Strömungsmechanik des Plattenwärmeübertragers.

Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die der Erfindung zugrunde liegende Aufgabe wird durch einen Plattenwärmeübertrager mit den Merkmalen des Anspruchs 1 gelöst. Demnach wird ein Plattenwärmeübertrager zum indirekten Übertragen von Wärme eines ersten Fluids auf ein zweites Fluid bereitgestellt, wobei der Plattenwärmeübertrager eine Vielzahl von parallelen Trennwänden aufweist, wobei zwischen je zwei parallelen Trennwänden ein Heizflächenelement angeordnet ist, so dass eine Vielzahl an Kanälen zur Aufnahme eines Fluides gebildet werden, wobei das jeweilige Heizflächenelement durch 3D-Drucken hergestellt ist, wobei das jeweilige Heizflächenelement zumindest einen ersten und einen zweiten Abschnitt aufweist, wobei die beiden Abschnitte einstückig aneinander angeformt sind, und wobei je ein Kanal des ersten Abschnitts mit zumindest einem Kanal des zweiten Abschnitts in Strömungsverbindung steht, und wobei die Kanäle des ersten Abschnitts in eine andere Richtung verlaufen als die Kanäle des zweiten Abschnitts, dadurch gekennzeichnet, dass das jeweilige Heizflächenelement eine wellenförmige Struktur mit alternierenden Wellentälern und Wellenbergen aufweist, wobei je ein Wellental mit einem darauf folgenden Wellenberg über eine Flanke des jeweiligen Heizflächenelementes verbunden ist, so dass sich die wellenförmige Struktur ergibt, und wobei das jeweilige Heizflächenelement an seinen durch die Wellenberge bzw. Wellentäler gebildeten Kontaktstellen mit den je zwei parallelen Trennblechen verlötet ist

Weiterhin besteht die Möglichkeit, dass die beiden Abschnitte des Heizflächenelementes, insbesondere im Querschnitt, eine unterschiedliche Geometrie aufweisen. Eine derartige unterschiedliche Geometrie kann natürlich auch für den Fall vorliegen, dass die Kanäle der beiden Abschnitte in eine unterschiedliche Richtung weisen.

Erfindungsgemäß weist das erfindungsgemäße Heizflächenelement, das auch als Fin bezeichnet wird, eine wellenförmige Struktur mit alternierenden Wellentälern und Wellenbergen auf, wobei je ein Wellental mit einem darauf folgenden Wellenberg über eine Flanke des Heizflächenelementes verbunden ist, so dass sich die wellenförmige Struktur ergibt. Die wellenförmige Struktur muss nicht notwendigerweise verrundet ausgebildet sein, sondern kann auch rechteckförmig ausgebildet sein. Wesentlich ist dabei ein im Querschnitt meanderförmiger Verlauf des Heizflächenelementes, so dass sich dieses zwischen je zwei Trennwänden des Plattenwärmeübertragers hin und her erstrecken kann.

Durch die Herstellung des Heizflächenelements mittels 3D-Druckens ist die Herstellung jeweils angepasster Heizflächenelemente für eine individuelle Anforderung kostengünstig umsetzbar.

Gemäß einer Ausführungsform des erfindungsgemäßen Plattenwärmeübertragers ist das Heizflächenelement bevorzugt mittels Lasersintern aus einem Metall, insbesondere aus Aluminium, gefertigt.

Bei einem solchen 3D-Druck-Verfahren wird das Heizflächenelement schichtweise aus einem pulverförmigem Werkstoff, insbesondere aufweisend ein Metall, insbesondere Aluminium, aufgebaut, wobei nacheinander mehrere Schichten des Werkstoffs übereinander aufgebracht werden, wobei jede Schicht vor dem Aufbringen der nächstfolgenden Schicht z.B. mittels eines (insbesondere auf die Schicht fokussierten) Laserstrahls in einem vordefinierten Bereich, der einem Querschnittsbereich des herzustellenden Heizflächenelementes entspricht, erhitzt wird und dabei an der darunterliegenden Schicht fixiert wird, insbesondere mit dieser verschmolzen wird.

Beim 3D-Drucken werden also Druckmaterialien zur Verfügung gestellt, welche dann durch zumindest teilweises Aufschmelzen beziehungsweise Anschmelzen der Oberfläche miteinander verbunden werden. Das 3D-Druckverfahren ist demnach ein generatives Verfahren, das auch die Herstellung von Hinterschneidungen erlaubt, die beim Gießen oder Pressen regelmäßig nicht oder nur vergleichsweise aufwändig realisiert werden können (z.B. beim Gießen durch einen verlorenen Kern).

Bei einem derartigen 3D-Drucken wird insbesondere eine Grenzflächendiffusion des beteiligten Materials erreicht, so dass das bestehende Material mit dem neu hinzugefügten Material wie aus einem Stück gefertigt gebildet ist. Damit ist insgesamt ein Heizflächenelement in einem Stück formbar, das die im Hinblick auf die jeweilige Verwendung optimale Form aufweist, die nicht den bei Umform- oder Gießprozessen gegebenen Limitierungen unterliegt.

Gemäß einer weiteren vorteilhaften Ausführungsform weist das Heizflächenelement zumindest eine Hinterschneidung auf, die sich in einer Richtung erstreckt, die parallel zu einer Erstreckungsebene des Heizelementes verläuft sowie insbesondere senkrecht zu den besagten Kanälen des Heizflächenelementes, die durch die wellenförmige Gestalt des Fins gebildet werden.

Aufgrund des erfindungsgemäßen schichtweisen Aufbaus des Heizflächenelementes kann dieses grundsätzlich alle erdenklichen Hinterschneidungen in beliebigen Richtungen aufweisen. Demgegenüber sind bei den bisher verwendeten Fertigungsverfahren Hinterschneidungen regelmäßig zu vermeiden, da ansonsten z.B. verlorene Formen (beim Gießen) oder mehrachsige Fräsverfahren eingesetzt werden müssen.

Weiterhin ist, wie oben bereits dargelegt, vorgesehen, dass das Heizflächenelement zumindest einen ersten und einen zweiten Abschnitt (oder mehrere Abschnitte) aufweist, wobei die beiden Abschnitte jeweils Kanäle zur Aufnahme des Fluides bilden und durch 3D-Drucken einstückig aneinander angeformt sind. Dabei ist je ein Kanal des ersten Abschnitts mit zumindest einem Kanal des zweiten Abschnitts strömungsverbunden, wobei die Kanäle des ersten Abschnitts in eine andere Richtung verlaufen als die Kanäle des zweiten Abschnitts.

So kann z.B. der erste Abschnitt als ein Eintrittsabschnitt des Heizflächenelementes ausgebildet sein, der stirnseitig Eintrittsöffnungen aufweist, die mit den Kanälen des ersten Abschnitts in Strömungsverbindung stehen, so dass über die Eintrittsöffnungen ein Fluid in die Kanäle des ersten Abschnitts einspeisbar und des Weiteren über die Kanäle des ersten Abschnitts auf die Kanäle des zweiten Abschnitts verteilbar ist, der hier insbesondere einen Hauptabschnitt des Heizflächenelementes bildet.

Auf diese Weise kann also das Heizflächenelement integral in vorteilhafter Weise die sogenannten Verteilerfins (Eintrittsabschnitt) aufweisen.

Alternativ kann der erste Abschnitt auch als ein Austrittsabschnitt des Heizflächenelementes ausgebildet sein, der stirnseitig Austrittsöffnungen aufweist, die mit den Kanälen des ersten Abschnitts bzw. Austrittsabschnitt in Strömungsverbindung stehen, so dass insbesondere über die Austrittsöffnungen ein Fluid aus dem ersten Abschnitt (Austrittsabschnitt) abziehbar ist, und wobei die Kanäle des ersten Abschnitts jeweils mit zumindest einem Kanal des zweiten Abschnitts (z.B. mittiger Hauptabschnitt) in Strömungsverbindung stehen, so dass ein Fluid aus dem zweiten Abschnitt bzw. Hauptabschnitt des Heizflächenelementes über den ersten Abschnitt (Austrittsabschnitt) und dessen Austrittsöffnungen aus dem Heizflächenelement abziehbar ist.

Weiterhin kann das Heizflächenelement auch einen dritten Abschnitt aufweisen, der integral (durch 3D-Drucken) an den ersten bzw. den zweiten Abschnitt angeformt ist. Der erste Abschnitt kann dabei einen Eintrittsabschnitt nach der oben beschriebenen Art ausbilden und der dritte Abschnitt einen vorstehend beschriebenen Austrittsabschnitt. Der zweite Abschnitt würde in diesem Fall den sogenannten Hauptabschnitt bilden, der im Strömungspfad des Fluides insbesondere zwischen dem ersten und dem zweiten Abschnitt des Heizflächenelementes angeordnet ist.

Bevorzugt ist weiterhin vorgesehen, dass die Kanäle insbesondere in den einzelnen Abschnitten gekrümmt verlaufen. So können insbesondere die Kanäle in den Eintrittsabschnitten gekrümmt zu den Eintrittsöffnungen hin verlaufen. Weiterhin können die Kanäle im Austrittsabschnitt gekrümmt zu den Austrittsöffnungen hin verlaufen.

Grundsätzlich können aufgrund der Herstellungsweise mittels 3D-Drucken die Kanäle des Heizflächenelementes (insbesondere in den einzelnen Abschnitten) in verschiedene Richtungen verlaufen und/oder verschiedene Geometrien aufweisen.

Das 3D-Drucken des Heizflächenelementes ermöglicht in vorteilhafterweise, dass z.B. die Eintritts- und Austrittsabschnitte einerseits und der Hauptabschnitt des Heizflächenelementes andererseits übergangslos ineinander übergehen. Hierdurch werden Offsets und Stoß-an-Stoß Verbindungen von Heizflächenelementen (Fins) in einer Passage vermieden.

Gemäß einer weiteren Ausführungsform ist vorgesehen, dass das Heizflächenelement auch Umspeisungen oder Zwischenein- und Zwischenausspeisungen in integraler Weise aufweist, d.h., abgesehen von dem Heizflächenelement selbst und den umgebenden Deckplatten und ggf. zu- und abführenden Stutzen sind bevorzugt keine weiteren separaten Elemente des Heizflächenelementes vorhanden, die die besagten Umspeisungen bzw. Zwischenein- und Zwischenausspeisungen vornehmen bzw. daran teilhaben.

Weiterhin ist gemäß einer bevorzugten Ausführungsform vorgesehen, dass die Geometrie des Heizflächenelementes innerhalb einer Passage abschnittsweise variiert, beispielsweise in Bezug auf ihre Teilung oder andere geometrische Parameter. Hierdurch können in einer Passage, in der das erfindungsgemäße Heizflächenelement angeordnet ist, einzelne oder mehrere Prozessparameter, wie z.B. die Strömungsgeschwindigkeit des Fluides (und damit insbesondere auch der Wärmeübergang), in dem entsprechenden Abschnitt des Heizflächenelementes genau an die jeweiligen Bedürfnisse angepasst werden.

Besonders bevorzugt ist vorgesehen, dass das Heizflächenelement innerhalb einer Lage bzw. über die jeweilige gesamte Lage des Plattenwärmeübertragers vollständig integral/einstückig ausgebildet ist. Hierbei können insbesondere auch Ausschnitte, Lochungen und/oder Versetzungen des Heizflächenelementes integral ausgeführt sein und können des Weiteren abschnittsweise variieren.

Die Trennwände des erfindungsgemäßen Plattenwärmeübertragers sind dazu eingerichtet, zwei am Wärmeaustausch beteiligte Fluide voneinander zu separieren, so dass kein Stoffaustausch zwischen den beiden Fluiden stattfindet. Zugleich ist die jeweilige Trennwand bevorzugt besonders gut wärmeleitend ausgebildet, so dass eine Wärmeübertragung von dem einen Fluid auf das andere Fluid möglich ist. Um die Kontaktoberfläche zu vergrößern und um eine drucktragende Verbindung benachbarter Trennwände zu realisieren sowie zur Bereitstellung von Strömungskanälen, sind zwischen den Trennwänden die Heizflächenelemente vorgesehen. Durch die Freiheit der Formung der Heizflächenelemente kann eine sehr gute Wärmeübertragung bei großer Stabilität des Heizflächenelements und geringem Strömungswiderstand in den einzelnen Kanälen realisiert werden.

Es ist gemäß der Erfindung denkbar, lediglich die Heizflächenelemente durch 3D-Drucken der vorbeschriebenen Art herzustellen und den restlichen Aufbau des Plattenwärmeübertragers nach bekannter Art vorzunehmen, z.B. durch Stapeln und Verlöten der Komponenten in einem Ofen (siehe oben).

Gemäß einer weiteren Ausgestaltung der Erfindung ist vorgesehen, dass zusätzlich zu den Heizflächenelementen zumindest eine oder mehrere weitere Komponenten des Plattenwärmeübertragers durch 3D-Drucken hergestellt ist bzw. sind. Hierbei kann es sich z.B. um eine, mehrere oder alle Trennwände, Deckwände, Stutzen, Sammler und/oder Sidebars des Plattenwärmeübertragers handeln. Werden mehrere Komponenten durch 3D-Drucken hergestellt, sind diese, sofern sie aneinander angrenzen, bevorzugt einstückig, d.h., integral, hergestellt bzw. 3D-gedruckt. D.h., sie werden gemeinsam Schicht für Schicht als einheitliche Baugruppe 3D-gedruckt.

Gemäß einer bevorzugten Ausführungsform ist vorgesehen, dass der gesamte Plattenwärmeübertrager einstückig durch 3D-Drucken gebildet ist.

Ein solcher Plattenwärmeübertrager hat trotz der integralen Ausbildung seiner Komponenten, insbesondere der Heizflächenelemente, einen größeren Freiheitsgrad in der Fertigung gegenüber vorbekannten Verfahren für die einzelnen Komponenten (z.B. Umformen, Gießen, Fräsen); denn die Zugänglichkeit ist aufgrund der schichtweisen, generativen Fertigung weniger kritisch. Insbesondere bei einer Fertigung mittels 3D-Druck, bei der keine Nachbearbeitung notwendig ist, muss eine mögliche Hinterschneidung für die Fertigung nicht beachtet werden.

Durch das Bilden der genannten Komponenten bzw. des gesamten Plattenwärmeübertragers durch 3D-Drucken können erhebliche Einsparungen hinsichtlich Material und Montage vorgenommen werden. Ganz besonders wird eine exakte Anpassung an den Belastungsfall möglich. Im Gegensatz zu vorbekannten Verfahren wird weniger oder sogar kein zusätzliches Material angebracht, welches allein durch die separate Herstellung der Komponenten bedingt ist beziehungsweise für ein Fügeverfahren notwendig ist. Bisher müssen viele Komponenten für ein Fügeverfahren ausgelegt sein, zum Beispiel Löten oder Schweißen, und müssen für diese Verbindungsverfahren eine deutlich größere Fläche und/oder andere Form aufweisen, um sicherzustellen, dass eine ausreichende Festigkeit der jeweiligen Fügeverbindung erzeugbar ist. Ganz besonders bevorzugt ist eine äußere Wandung des Plattenwärmeübertragers, die die einzelnen Wärmeaustauschpassagen nach außen begrenzt, durch 3D-Drucken einstückig mit zumindest den Trennwänden und/oder zumindest den Heizflächenelementen, bevorzugt allen Komponenten im Inneren des Plattenwärmeübertragers, ausgebildet, wobei insbesondere zur äußeren Wandung ein spannungsoptimaler Übergang ausgebildet ist.

Gemäß der vorliegenden Erfindung ist das Heizflächenelement, dazu eingerichtet und vorgesehen ist, zwischen zwei parallelen Trennwänden des Plattenwärmeübertragers angeordnet zu werden, so dass eine Vielzahl an Kanälen zur Aufnahme eines Fluides gebildet werden. Erfindungsgemäß ist hierbei vorgesehen, dass das Heizflächenelement durch 3D-Drucken hergestellt wird, wobei insbesondere das Heizflächenelement durch 3D-Drucken, insbesondere Lasersintern, aus einem Metall, insbesondere aus Aluminium, gefertigt wird.

Bei dem 3D-Drucken ist vorzugsweise vorgesehen, dass das Heizflächenelement schichtweise aus einem pulverförmigem Werkstoff, insbesondere aufweisend ein Metall, insbesondere Aluminium, aufgebaut wird, wobei nacheinander mehrere Schichten des Werkstoffs übereinander aufgebracht werden, wobei jede Schicht vor dem Aufbringen der nächstfolgenden Schicht mittels eines (insbesondere auf die Schicht fokussierten) Laserstrahls in einem vordefinierten Bereich, der einem Querschnittsbereich des herzustellenden Heizflächenelementes entspricht, erhitzt wird und dabei an der darunterliegenden Schicht fixiert wird, insbesondere mit dieser verschmolzen wird.

Durch ein solches, grenzflächendiffusives Aufbauen des Heizflächenelements aus einzelnen aneinander angeformten Schichten wird ein einstückiges Element gebildet, welches die Werkstofffestigkeiten von einem entsprechenden Vollmaterial aufweisen kann. Insbesondere sind die Grenzflächen der jeweiligen Schichten diffusiv miteinander verbunden. Das heißt, insbesondere bei einem Metall, besonders bevorzugt Aluminium, werden Kristalle ausgebildet, die sich über die Grenzflächen der gefügten Materialabschnitte hinaus erstrecken. Das schmelzbare Material wird besonders bevorzugt in Partikelform (z.B. als Pulver) zur Verfügung gestellt, wobei die Partikel insgesamt aufgeschmolzen werden können oder nur deren Oberfläche, wobei die Partikel des Pulvers mit einem Binder beschichtet sein können.

Weiterhin wird gemäß einem Aspekt der Erfindung die Herstellung eines erfindungsgemäßen Plattenwärmeübertragers, vorgeschlagen, wobei zumindest die Heizflächenelemente des Plattenwärmeübertragers, sowie insbesondere zumindest eine weitere Komponente des Plattenwärmeübertragers, bevorzugt der gesamte Plattenwärmeübertrager, durch 3D-Drucken hergestellt wird, insbesondere durch Lasersintern, insbesondere aus einem Metall, insbesondere Aluminium, wobei das jeweilige Heizflächenelement zumindest einen ersten und einen zweiten Abschnitt aufweist, die beiden Abschnitte einstückig aneinander angeformt sind, und wobei je ein Kanal des ersten Abschnitts mit zumindest einem Kanal des zweiten Abschnitts in Strömungsverbindung steht, und wobei die Kanäle des ersten Abschnitts in eine andere Richtung verlaufen als die Kanäle des zweiten Abschnitts, und wobei das jeweilige Heizflächenelement eine wellenförmige Struktur mit alternierenden Wellentälern und Wellenbergen aufweist, wobei je ein Wellental mit einem darauf folgenden Wellenberg über eine Flanke des jeweiligen Heizflächenelementes verbunden ist, so dass sich die wellenförmige Struktur ergibt, und wobei das jeweilige Heizflächenelement an seinen durch die Wellenberge bzw. Wellentäler gebildeten Kontaktstellen mit den je zwei parallelen Trennblechen verlötet wird.

Die Fertigung des Plattenwärmeübertragers aus einem Metall macht diesen besonders stabil und robust gegenüber Umwelteinflüssen.

Bei der Herstellung des Plattenwärmeübertragers bzw. einzelner oder mehrerer Komponenten des Plattenwärmeübertragers wird dieser bzw. die betreffenden Komponenten, wie z.B. Fins, Trennwände, Deckwände, Sidebars, Header und Stutzen, bevorzugt schichtweise aus einem pulverförmigem Werkstoff, insbesondere aufweisend ein Metall, insbesondere Aluminium, aufgebaut, wobei nacheinander mehrere Schichten des Werkstoffs übereinander aufgebracht werden, wobei jede Schicht vor dem Aufbringen der nächstfolgenden Schicht mittels eines (insbesondere auf die Schicht fokussierten) Laserstrahls in einem vordefinierten Bereich, der einem Querschnittsbereich des herzustellenden Plattenwärmeübertragers bzw. der jeweiligen Komponente entspricht, erhitzt wird und dabei an der darunterliegenden Schicht fixiert wird, insbesondere mit dieser verschmolzen wird.

Insbesondere können so auch externer Leitungsanschlüsse, d.h., Sammler und/oder Stutzen, einstückig mittels 3D-Drucken an den Wärmeübertragerblock angeformt werden. Bei derartigen externen Leitungsanschlüssen werden bisher angeschweißte Anschlüsse bzw. Sammler und Stutzen verwendet, die sehr sorgsam gefügt werden müssen (z.B. durch Schweißen), um Undichtigkeiten zu vermeiden. Durch die einstückige Ausbildung entfallen derartige Fügeschritte bei der Herstellung des Plattenwärmeübertragers mit Vorteil.

Die oben beschriebene Erfindung wird nachfolgend vor dem betreffenden technischen Hintergrund unter Bezugnahme auf die zugehörigen Zeichnungen, die bevorzugte Ausgestaltungen zeigen, detailliert erläutert. Es wird dargestellt in
- Fig. 1:: einen Plattenwärmeübertrager des Stands der Technik;
- Fig. 2:: ein erfindungsgemäßes Heizflächenelement; und
- Fig. 3: ein erfindungsgemäßes Heizflächenelement mit einem einstückig angeformten Eintritts- oder Austrittsabschnitt.

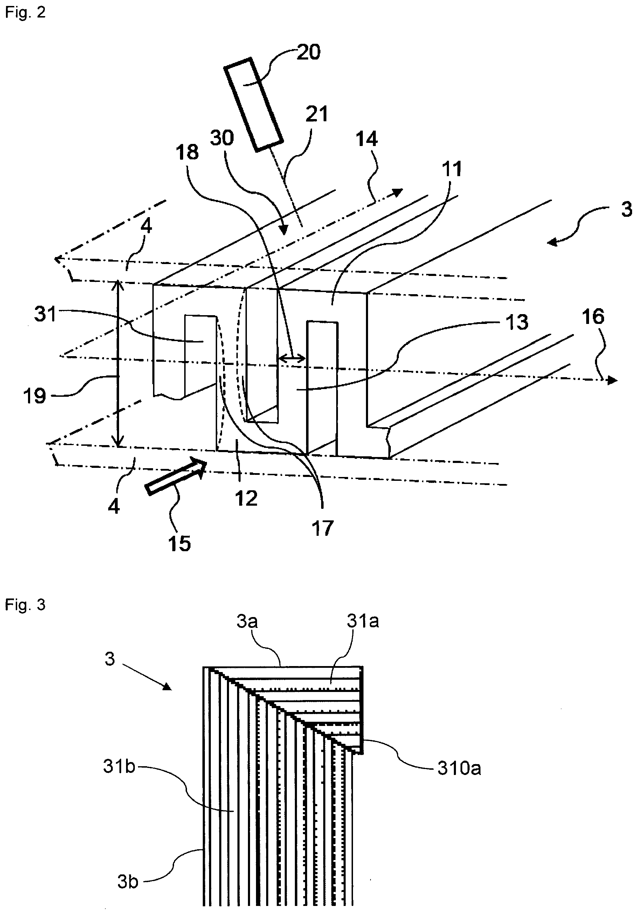

In Fig. 2 ist beispielhaft ein erfindungsgemäßes Heizflächenelement oder Fin 3 gezeigt, der durch 3D-Drucken, hier Lasersintern, hergestellt ist, wobei das Heizflächenelement 3 schichtweise aus einem pulverförmigem Werkstoff, z.B. aufweisend Aluminiumpulver, hergestellt wird, indem nacheinander mehrere Schichten des Werkstoffs übereinander aufgebracht werden, wobei jede Schicht vor dem Aufbringen der nächstfolgenden Schicht mittels eines durch einen Laser 20 erzeugten Laserstrahls 21 in einem vordefinierten Bereich, der einem Querschnittsbereich 30 des herzustellenden Heizflächenelementes 3 entspricht, erhitzt wird und dabei an der darunterliegenden Schicht fixiert wird, insbesondere mit dieser verschmolzen wird. Andere 3D-Druckverfahren sind natürlich auch denkbar.

Auf diese Weise kann ein einstückiger, beliebig geformter Fin 3 hergestellt werden, der sich hier entlang einer Erstreckungsebene erstreckt, die parallel zu den angrenzenden Trennwänden 4 des späteren Plattenwärmeübertragers verläuft, zwischen denen das Heizflächenelement 3 angeordnet werden soll. Mit dem erfindungsgemäßen Verfahren können natürlich auch die Trennwände 4 integral mit dem Fin 3 durch das 3D-Drucken hergestellt werden. Weiterhin kann der gesamte in Fig. 1 gezeigte Plattenwärmeübertrager 10 auf diese Weise hergestellt werden, und zwar insbesondere durch 3D-Drucken der einzelnen Komponenten (z.B. Fins 3, Trennwände 4, Deckwände 5, Fins 2, 3, Sammler 7, Stutzen 6, Sidebars 8) oder durch integrales 3D-Drucken mehrerer oder aller Komponenten (d.h. des gesamten Plattenwärmeübertragers 10). Fig. 1 zeigt insofern auch ein Ausführungsbeispiel der vorliegenden Erfindung.

In dem Ausführungsbeispiel gemäß Figur 2 erstrecken sich die einzelnen Schichten, aus denen das Heizflächenelement 3 aufgebaut wird bzw. ist, jeweils parallel zu den Trennwänden 4 des Plattenwärmeübertragers, d.h., die einzelnen Schichten sind übereinander in Richtung der Höhe 19 des Heizflächenelementes 3 angeordnet. Der Schichtaufbau kann jedoch auch in eine andere Richtung erfolgen. Vorliegend erhält das Heizflächenelement 3 beim 3D-Drucken eine wellenförmige Struktur, bei der eine Vielzahl von Wellentälern 12 und Wellenbergen 11 alternierend in einer ersten Richtung 16 hintereinander angeordnet sind, die sich parallel zu den Trennwänden 4 erstreckt. Benachbarte Wellentäler 12 und Wellenberge 11 sind je durch eine Flanke 13 des Heizflächenelementes 3 einstückig miteinander verbunden, so dass zusammen mit den Trennwänden 4 eine Vielzahl von Kanälen 31 begrenzt werden, in denen ein Fluid strömen kann, und zwar parallel zu den Trennwänden 4 sowie senkrecht zur ersten Richtung 16. Die zwei gezeigten Trennwände 4 und das Heizflächenelement 3 bilden auf diese Weise eine Wärmeaustauschpassage des Plattenwärmeübertragers. Bei einem integral 3D-gedruckten Plattenwärmeübertrager sind die Wellenberge 11 bzw. Wellentäler 12 des Fins 3 einstückig an die jeweils angrenzende Trennwand 4 angeformt.

Durch die erfindungsgemäße Herstellung des Fins 3 können auf einfache Weise z.B. Hinterschneidungen 17, z.B. in Form von konkaven Ausnehmungen der Flanken 13 (hier mit gestrichelten Linien dargestellt), realisiert werden, die sich z.B. entlang der ersten Richtung 16 erstrecken und bei anderen Herstellungsverfahren weitaus schwieriger herzustellen sind (siehe oben). Weiterhin kann durch den 3D-Druck auch die Stärke 18 des Heizflächenelementes 3 an den jeweils notwendigen Wert, z.B. im Hinblick auf den zu tragenden Druck, angepasst werden.

Figur 3 zeigt eine weitere Ausführungsform eines erfindungsgemäßen Heizflächenelements 3, das wiederum zwischen zwei Trennwänden bzw. zwischen einer Trennwand und einer Deckwand eines Plattenwärmeübertragers 10 anzuordnen ist. Bei dem Heizflächenelement 3 gemäß Figur 3 stellt nun z.B. der Verteilerfin 3a (vergleiche z.B. Verteilerfin 2 gemäß Fig. 1) einen integralen Bestandteil des Heizflächenelementes 3 dar.

Im Einzelnen weist das Heizflächenelement 3 gemäß Figur 3 zumindest einen ersten Abschnitt 3a (bildet z.B. den Verteilerfin) sowie einen zweiten Abschnitt 3b auf, wobei die beiden Abschnitte 3a, 3b jeweils Kanäle 31a, 31b zur Aufnahme eines am Wärmetausch beteiligten Fluides bilden und durch 3D-Drucken einstückig aneinander angeformt sind. Hier steht bevorzugt je ein Kanal 31a des ersten Abschnitts 3a mit zumindest einem Kanal 31b des zweiten Abschnitts 3b in Strömungsverbindung. Wie aus Figur 3 ersichtlich, verlaufen die Kanäle 31a des ersten Abschnitts 3a in eine andere Richtung als die Kanäle 31b des zweiten Abschnitts 3b.

Wie bereits angedeutet, kann es sich bei dem ersten Abschnitt 3a z.B. um einen Eintrittsabschnitt 3a bzw. Verteilerfin des Heizflächenelementes 3 handeln, der stirnseitig Eintrittsöffnungen 310a aufweist die z.B. in eine Außenseite des Plattenwärmeübertragers 10 münden (vgl. Fig. 1), und die mit den Kanälen 31a des Eintrittsabschnitts 3a in Strömungsverbindung stehen, so dass über die Eintrittsöffnungen 310a ein Fluid in die Kanäle 31a des Eintrittsabschnitts 3a einspeisbar und des Weiteren über die Kanäle 31a des Eintrittsabschnitts 3a auf die Kanäle 31b des zweiten Abschnitts 31b verteilbar ist, der hier z.B. einen Hauptabschnitt 3b des Heizflächenelementes 3 bildet, der vornehmlich der Wärmeübertragung zwischen dem im Hauptabschnitt 3b geführten Fluid und zumindest einem weiteren Prozessstrom dient.

Weiterhin kann natürlich auch der erste Abschnitt 3a als ein Austrittsabschnitt des Heizflächenelementes ausgebildet sein, der Austrittsöffnungen 310a aufweist, die mit den Kanälen 31a des ersten Abschnitts bzw. Austrittsabschnitts 3a in Strömungsverbindung stehen, so dass insbesondere über die Austrittsöffnungen 310a ein Fluid aus dem Austrittsabschnitt 3a abziehbar ist, und wobei die Kanäle 31a des Austrittsabschnitts jeweils mit zumindest einem Kanal des zweiten Abschnitts 3b in Strömungsverbindung stehen, so dass ein Fluid aus dem zweiten Abschnitt (z.B. Hauptabschnitt, siehe oben) 3b über den Austrittsabschnitt 3a und dessen Austrittsöffnungen 310 a aus dem Heizflächenelement 3 abziehbar ist.

Natürlich können sowohl Eintritts- als auch Austrittsabschnitte durch entsprechendes 3D-Drucken einstückig an einen Hauptabschnitt eines Heizflächenelementes 3 angeformt sein. Der Hauptabschnitt des Heizflächenelementes kann hierbei im Strömungspfad des von ihm geführten Fluides zwischen dem Eintritts- und dem Austrittsabschnitt angeordnet sein.

Gemäß Figur 3 treffen die Kanäle 31a des ersten Abschnitts 3a winklig auf die Kanäle 31b des zweiten Abschnitts 3b. Alternativ hierzu können die Kanäle 31a des ersten Abschnitts 3a ausgehend von den Kanälen 31b des zweiten Abschnitts 3b natürlich auch gekrümmt zu den Eintritts- bzw. Austrittsöffnungen 310 hin verlaufen. Mit dem hier vorgeschlagenen Heizflächenelement 3 bzw. Plattenwärmeübertrager und deren Herstellungsverfahren lässt sich eine strömungsoptimale Geometrie für Einzelanwendungen kostengünstig erzeugen.

**Bezugszeichenliste**

| | |
|---|---|
| 1 | Wärmeaustauschpassage |
| 2 | Verteilerfin |
| 3 | Lamelle, Fin |
| 3a, 3b | Abschnitte |
| 4 | Trennwand |
| 5 | Deckwand |
| 6 | Stutzen |
| 7 | Sammler (Header) |
| 8 | Seitenleiste (Sidebar) |
| 9 | Eintrittsöffnung und Austrittsöffnung |
| 10 | Plattenwärmeübertrager |
| 11 | Wellenberg |
| 12 | Wellental |
| 13 | Flanke |
| 14 | Strömungsrichtung |
| 15 | Anströmung |
| 16 | erste Richtung |
| 17 | Hinterschneidung |
| 18 | Blechstärke |
| 19 | Höhe des Fins senkrecht zu seiner Erstreckungsebene |
| 20 | Laser |
| 21 | Laserstrahl |
| 30 | Querschnittsbereich |
| 31, 31a, 31b | Kanal |
| 310a | Eintritts- oder Austrittsöffnungen |

## Patentansprüche

1. Plattenwärmeübertrager (10) zum indirekten Übertragen von Wärme eines ersten Fluids auf ein zweites Fluid, wobei der Plattenwärmeübertrager (10) eine Vielzahl von parallelen Trennwänden (4) aufweist, wobei zwischen je zwei parallelen Trennwänden (4) ein Heizflächenelement (2, 3) angeordnet ist, so dass eine Vielzahl an Kanälen (31) zur Aufnahme eines Fluides gebildet werden, **wobei** das jeweilige Heizflächenelement (2,3) durch 3D-Drucken hergestellt ist, wobei das jeweilige Heizflächenelement (3) zumindest einen ersten und einen zweiten Abschnitt (3a, 3b) aufweist, wobei die beiden Abschnitte (3a, 3b) einstückig aneinander angeformt sind, und wobei je ein Kanal (31a) des ersten Abschnitts (3a) mit zumindest einem Kanal (31b) des zweiten Abschnitts (3b) in Strömungsverbindung steht, und wobei die Kanäle (31a) des ersten Abschnitts (3a) in eine andere Richtung verlaufen als die Kanäle (31b) des zweiten Abschnitts (3b), **dadurch gekennzeichnet, dass** das jeweilige Heizflächenelement (3) eine wellenförmige Struktur mit alternierenden Wellentälern und Wellenbergen aufweist, wobei je ein Wellental mit einem darauf folgenden Wellenberg über eine Flanke des jeweiligen Heizflächenelementes verbunden ist, so dass sich die wellenförmige Struktur ergibt, und wobei das jeweilige Heizflächenelement an seinen durch die Wellenberge bzw. Wellentäler gebildeten Kontaktstellen mit den je zwei parallelen Trennblechen (4) verlötet ist.

2. Plattenwärmeübertrager nach Anspruch 1, **dadurch gekennzeichnet, dass** das jeweilige Heizflächenelement (2,3) durch 3D-Drucken, insbesondere Lasersintern, aus einem Metall, insbesondere aus Aluminium, gefertigt ist.

3. Plattenwärmeübertrager nach einem der vorhergehenden Ansprüche, **dadurch gekennzeichnet, dass** bei dem 3D-Drucken das jeweilige Heizflächenelement (2, 3) schichtweise aus einem pulverförmigem Werkstoff, insbesondere aufweisend ein Metall, insbesondere Aluminium, aufgebaut wird, wobei nacheinander mehrere Schichten des Werkstoffs übereinander aufgebracht werden, wobei jede Schicht vor dem Aufbringen der nächstfolgenden Schicht mittels eines Laserstrahls (21) in einem vordefinierten Bereich, der einem Querschnittsbereich (30) des herzustellenden Heizflächenelementes (2, 3) entspricht, erhitzt wird und dabei an der darunterliegenden Schicht fixiert wird, insbesondere mit dieser verschmolzen wird.

4. Plattenwärmeübertrager nach einem der vorhergehenden Ansprüche, **dadurch gekennzeichnet, dass** das jeweilige Heizflächenelement (2, 3) zumindest eine Hinterschneidung (17) aufweist, die sich in einer ersten Richtung (16) erstreckt, die parallel zu einer Erstreckungsebene des Heizelementes (2, 3) verläuft sowie insbesondere senkrecht zu den besagten Kanälen (30).

5. Plattenwärmeübertrager nach einem der vorhergehenden Ansprüche, **dadurch gekennzeichnet, dass** der erste Abschnitt (3a) als ein Eintrittsabschnitt des jeweiligen Heizflächenelementes (3) ausgebildet ist, der Eintrittsöffnungen (310a) aufweist, die mit den Kanälen (31a) des ersten Abschnitts (3a) in Strömungsverbindung stehen, so dass über die Eintrittsöffnungen (310a) ein Fluid in die Kanäle (31a) des ersten Abschnitts (3a) einspeisbar und des Weiteren über die Kanäle (31a) des ersten Abschnitts (3a) auf die Kanäle (31b) des zweiten Abschnitts (3b) verteilbar ist,
oder
dass der erste Abschnitt (3a) als ein Austrittsabschnitt des jeweiligen Heizflächenelementes (3) ausgebildet ist, der Austrittsöffnungen (310a) aufweist, die mit den Kanälen (31a) des ersten Abschnitts (3a) in Strömungsverbindung stehen, so dass über die Austrittsöffnungen (310a) ein Fluid aus dem ersten Abschnitt (3a) abziehbar ist, und wobei die Kanäle (31a) des ersten Abschnitts (3a) jeweils mit zumindest einem Kanal (31b) des zweiten Abschnitts (3b) in Strömungsverbindung stehen, so dass ein Fluid aus dem zweiten Abschnitt (3b) über den ersten Abschnitt (3a) und dessen Austrittsöffnungen (310a) aus dem jeweiligen Heizflächenelement (3) abziehbar ist.

6. Plattenwärmeübertrager nach einem der vorhergehenden Ansprüche, **dadurch gekennzeichnet, dass** die Kanäle (31a, 31b) des ersten und/oder des zweiten Abschnitts (3a, 3b) gekrümmt verlaufen, insbesondere zu den Eintritts- oder Austrittsöffnungen (310a) hin.

7. Plattenwärmeübertrager nach einem der vorhergehenden Ansprüche, **dadurch gekennzeichnet, dass** die Kanäle (31, 31a, 31b) in verschiedene Richtungen verlaufen und/oder verschiedene Geometrien aufweisen.

8. Plattenwärmeübertrager (10) nach einem der vorhergehenden Ansprüche, **dadurch gekennzeichnet, dass** zusätzlich zu den Heizflächenelementen (2,3) zumindest eine oder mehrere der folgenden Komponenten des Plattenwärmeübertragers durch 3D-Drucken hergestellt ist bzw. sind:
- eine Trennwand (4),
- eine Deckwand (5),
- ein Stutzen (6),
- ein Sammler (7), oder
- eine Seitenleiste (8).

9. Verfahren zur Herstellung eines Plattenwärmeübertragers (10) nach einem der vorhergehenden Ansprüche, **dadurch gekennzeichnet, dass** zumindest die Heizflächenelemente (2, 3) des Plattenwärmeübertragers (10), sowie insbesondere zumindest eine weitere Komponente (4, 5, 6, 7, 8), durch 3D-Drucken hergestellt werden, insbesondere durch Lasersintern, insbesondere aus einem Metall, insbesondere Aluminium, wobei das jeweilige Heizflächenelement (3) zumindest einen ersten und einen zweiten Abschnitt (3a, 3b) aufweist, wobei die beiden Abschnitte (3a, 3b) einstückig aneinander angeformt sind, und wobei je ein Kanal (31a) des ersten Abschnitts (3a) mit zumindest einem Kanal (31b) des zweiten Abschnitts (3b) in Strömungsverbindung steht, und wobei die Kanäle (31a) des ersten Abschnitts (3a) in eine andere Richtung verlaufen als die Kanäle (31) des zweiten Abschnitts (3b), und wobei das jeweilige Heizflächenelement (3) eine wellenförmige Struktur mit alternierenden Wellentälern und Wellenbergen aufweist, wobei je ein Wellental mit einem darauf folgenden Wellenberg über eine Flanke des jeweiligen Heizflächenelementes verbunden ist, so dass sich die wellenförmige Struktur ergibt, und wobei das jeweilige Heizflächenelement an seinen durch die Wellenberge bzw. Wellentäler gebildeten Kontaktstellen mit den je zwei parallelen Trennblechen (4) verlötet wird.

10. Verfahren zur Herstellung eines Plattenwärmeübertragers (10) nach Anspruch 9, **dadurch gekennzeichnet, dass** zumindest die Heizflächenelemente (2, 3) des Plattenwärmeübertragers (10), sowie insbesondere zumindest eine weitere Komponente (4, 5, 6, 7, 8), bei dem 3D-Drucken schichtweise aus einem pulverförmigem Werkstoff, insbesondere aufweisend ein Metall, insbesondere Aluminium, aufgebaut wird, wobei nacheinander mehrere Schichten des Werkstoffs übereinander aufgebracht werden, wobei jede Schicht vor dem Aufbringen der nächstfolgenden Schicht mittels eines Laserstrahls (21) in einem vordefinierten Bereich, der einem Querschnittsbereich (30) des herzustellenden Plattenwärmeübertragers entspricht, erhitzt wird und dabei an der darunterliegenden Schicht fixiert wird, insbesondere mit dieser verschmolzen wird.

## Claims

1. Plate heat exchanger (10) for the indirect transfer of heat of a first fluid to a second fluid, the plate heat exchanger (10) having a multiplicity of parallel separating walls (4), a heating surface element (2, 3) being arranged in each case between two parallel separating walls (4), so that a multiplicity of channels (31) for receiving a fluid are formed, **wherein** the respective heating surface element (2, 3) is produced by 3D printing, the respective heating surface element (3) having at least a first portion (3a) and a second portion (3b), the two portions (3a, 3b) being formed one on the other in one piece, and in each case a channel (31a) of the first portion (3a) being in flow connection with at least one channel (31b) of the second portion (3b), and the channels (31a) of the first portion (3a) running in a different direction than the channels (31b) of the second portion (3b), **characterized in that** the respective heating surface element (3) has a corrugated structure with alternating corrugation troughs and corrugation crests, a corrugation trough being connected in each case to a then following corrugation crest by way of a flank of the respective heating surface element, so that the corrugated structure is obtained, and the respective heating surface element being brazed to the two parallel parting sheets (4) in each case at its contact points that are formed by the corrugation crests and corrugation troughs.

2. Plate heat exchanger according to Claim 1, **characterized in that** the respective heating surface element (2, 3) is produced by 3D printing, in particular laser sintering, from a metal, in particular from aluminum.

3. Plate heat exchanger according to one of the preceding claims, **characterized in that** in the 3D printing the respective heating surface element (2, 3) is built up layer by layer from a powdered material, in particular comprising a metal, in particular aluminum, a number of layers of the material being successively applied one on top of the other, each layer before the application of the next following layer being heated by means of a laser beam (21) in a predefined region that corresponds to a cross-sectional region (30) of the heating surface element (2, 3) to be produced, and thereby fixed on the layer lying thereunder, in particular fused to it.

4. Plate heat exchanger according to one of the preceding claims, **characterized in that** the respective heating surface element (2, 3) has at least one undercut (17), which extends in a first direction (16) that runs parallel to a plane of extent of the heating element (2, 3) and in particular perpendicular to the said channels (30).

5. Plate heat exchanger according to one of the preceding claims, **characterized in that** the first portion (3a) is formed as an inlet portion of the respective heating surface element (3), which has inlet openings (310a) that are in flow connection with the channels (31a) of the first portion (3a), so that a fluid can be fed into the channels (31a) of the first portion (3a) by way of the inlet openings (310a), and furthermore can be distributed by the channels (31a) of the first portion (3a) among the channels (31b) of the second portion (3b),
or
**in that** the first portion (3a) is formed as an outlet portion of the respective heating surface element (3), which has outlet openings (310a) that are in flow connection with the channels (31a) of the first portion (3a), so that a fluid can be drawn off from the first portion (3a) by way of the outlet openings (310a), and the channels (31a) of the first portion (3a) being respectively in flow connection with at least one channel (31b) of the second portion (3b), so that a fluid can be drawn off out of the respective heating surface element (3) from the second portion (3b) by way of the first portion (3a) and its outlet openings (310a).

6. Plate heat exchanger according to one of the preceding claims, **characterized in that** the channels (31a, 31b) of the first and/or the second portion (3a, 3b) run in a curved manner, in particular toward the inlet or outlet openings (310a).

7. Plate heat exchanger according to one of the preceding claims, **characterized in that** the channels (31, 31a, 31b) run in different directions and/or have different geometries.

8. Plate heat exchanger (10) according to one of the preceding claims, **characterized in that**, in addition to the heating surface elements (2, 3), at least one or more of the following components of the plate heat exchanger is or are produced by 3D printing:
- a separating wall (4),
- an outer wall (5),
- a nozzle (6),
- a manifold (7), or
- a side bar (8).

9. Method for producing a plate heat exchanger (10) according to one of the preceding claims, **characterized in that** at least the heating surface elements (2, 3) of the plate heat exchanger (10), and also in particular at least one further component (4, 5, 6, 7, 8), are produced by 3D printing, in particular by laser sintering, in particular from a metal, in particular aluminium, the respective heating surface element (3) having at least a first and a second portion (3a, 3b), the two portions (3a, 3b) being formed one on the other in one piece, and in each case one channel (31a) of the first portion (3a) being flow-connected to at least one channel (31b) of the second portion (3b), and the channels (31a) of the first portion (3a) running in a different direction than the channels (31) of the second portion (3b), and the respective heating surface element (3) having a corrugated structure with alternating corrugation troughs and corrugation crests, a corrugation trough being connected in each case to a then following corrugation crest by way of a flank of the respective heating surface element, so that the corrugated structure is obtained, and the respective heating surface element being brazed to the two parallel parting sheets (4) in each case at its contact points that are formed by the corrugation crests and corrugation troughs.

10. Method for producing a plate heat exchanger (10) according to Claim 9, **characterized in that** at least the heating surface elements (2, 3) of the plate heat exchanger (10), and also in particular at least one further component (4, 5, 6, 7, 8), are built up in the 3D printing layer by layer from a powdered material, in particular comprising a metal, in particular aluminum, a number of layers of the material being successively applied one on top of the other, each layer before the application of the next following layer being heated by means of a laser beam (21) in a predefined region that corresponds to a cross-sectional region (30) of the plate heat exchanger to be produced, and thereby fixed on the layer lying thereunder, in particular fused to it.

## Revendications

1. Échangeur de chaleur à plaques (10) servant au transfert indirect de chaleur d'un premier fluide à un deuxième fluide, l'échangeur de chaleur à plaques (10) comprenant une pluralité de parois de séparation (4) parallèles, un élément de surface chauffante (2, 3) étant disposé entre deux parois de séparation (4) parallèles, de telle sorte qu'une pluralité de canaux (31) servant à recevoir un fluide soient formés, l'élément de surface chauffante (2, 3) respectif étant produit par impression 3D, l'élément de surface chauffante (3) respectif comprenant au moins une première et une deuxième partie (3a, 3b), les deux parties (3a, 3b) étant formées d'une seule pièce l'une sur l'autre, et un canal (31a) respectif de la première partie (3a) étant en liaison fluidique avec au moins un canal (31b) de la deuxième partie (3b), et les canaux (31a) de la première partie (3a) s'étendant dans une autre direction que celle des canaux (31b) de la deuxième partie (3b), **caractérisé en ce que** l'élément de surface chauffante (3) respectif présente une structure ondulée dotée de creux d'onde et de crêtes d'onde alternés, un creux d'onde étant relié respectivement à une crête d'onde suivante par le biais d'un flanc de l'élément de surface chauffante respectif, de manière à produire la structure ondulée, et l'élément de surface chauffante respectif étant brasé sur les deux tôles de séparation (4) parallèles respectives au niveau de ses points de contact formés par les crêtes d'onde et les creux d'onde.

2. Échangeur de chaleur à plaques selon la revendication 1, **caractérisé en ce que** l'élément de surface chauffante (2, 3) respectif est fabriqué par impression 3D, en particulier par frittage laser, à partir d'un métal, en particulier à partir d'aluminium.

3. Échangeur de chaleur à plaques selon l'une quelconque des revendications précédentes, **caractérisé en ce que**, lors de l'impression 3D, l'élément de surface chauffante (2, 3) respectif est formé par couches à partir d'une matière pulvérulente, en particulier comprenant un métal, en particulier de l'aluminium, plusieurs couches de la matière étant appliquées successivement les unes sur les autres, chaque couche étant, avant l'application de la couche suivante, chauffée au moyen d'un faisceau laser (21) dans une région prédéfinie qui correspond à une région de section transversale (30) de l'élément de surface chauffante (2, 3) à produire, et étant ainsi fixée à la couche sous-jacente, en particulier fusionnée avec celle-ci.

4. Échangeur de chaleur à plaques selon l'une quelconque des revendications précédentes, **caractérisé en ce que** l'élément de surface chauffante (2, 3) respectif comprend au moins une contre-dépouille (17) qui s'étend dans une première direction (16) qui s'étend parallèlement à un plan d'étendue de l'élément chauffant (2, 3) ainsi qu'en particulier perpendiculairement auxdits canaux (30).

5. Échangeur de chaleur à plaques selon l'une quelconque des revendications précédentes, **caractérisé en ce que** la première partie (3a) est réalisée sous la forme d'une partie d'entrée de l'élément de surface chauffante (3) respectif, laquelle partie d'entrée comprend des ouvertures d'entrée (310a) qui sont en liaison fluidique avec les canaux (31a) de la première partie (3a), de telle sorte que, par le biais des ouvertures d'entrée (310a), un fluide puisse être introduit dans les canaux (31a) de la première partie (3a) et, par le biais des canaux (31a) de la première partie (3a), puisse être réparti sur les canaux (31b) de la deuxième partie (3b),
ou
**en ce que** la première partie (3a) est réalisée sous la forme d'une partie de sortie de l'élément de surface chauffante (3) respectif, laquelle partie de sortie comprend des ouvertures de sortie (310a) qui sont en liaison fluidique avec les canaux (31a) de la première partie (3a), de telle sorte que, par le biais des ouvertures de sortie (310a), un fluide puisse être extrait de la première partie (3a), et les canaux (31a) de la première partie (3a) étant respectivement en liaison fluidique avec au moins un canal (31b) de la deuxième partie (3b), de telle sorte qu'un fluide provenant de la deuxième partie (3b) puisse être, par le biais de la première partie (3a) et de ses ouvertures de sortie (310a), extrait de l'élément de surface chauffante (3) respectif.

6. Échangeur de chaleur à plaques selon l'une quelconque des revendications précédentes, **caractérisé en ce que** les canaux (31a, 31b) de la première et/ou de la deuxième partie (3a, 3b) s'étendent de manière incurvée, en particulier en direction des ouvertures d'entrée ou de sortie (310a).

7. Échangeur de chaleur à plaques selon l'une quelconque des revendications précédentes, **caractérisé en ce que** les canaux (31, 31a, 31b) s'étendent dans différentes directions et/ou présentent différentes géométries.

8. Échangeur de chaleur à plaques (10) selon l'une quelconque des revendications précédentes, **caractérisé en ce qu'**en plus des éléments de surface chauffante (2, 3), au moins un ou plusieurs des composants suivants de l'échangeur de chaleur à plaques est ou sont produits par impression 3D :
- une paroi de séparation (4),
- une paroi supérieure (5),
- une tubulure (6),
- un collecteur (7), ou
- une baguette latérale (8).

9. Procédé de production d'un échangeur de chaleur à plaques (10) selon l'une quelconque des revendications précédentes, **caractérisé en ce qu'**au moins les éléments de surface chauffante (2, 3) de l'échangeur de chaleur à plaques (10) ainsi qu'en particulier au moins un autre composant (4, 5, 6, 7, 8) sont produits par impression 3D, en particulier par frittage laser, en particulier à partir d'un métal, en particulier à partir d'aluminium, l'élément de surface chauffante (3) respectif comprenant au moins une première et une deuxième partie (3a, 3b), les deux parties (3a, 3b) étant formées d'une seule pièce l'une sur l'autre, et un canal (31a) respectif de la première partie (3a) étant en liaison fluidique avec au moins un canal (31b) de la deuxième partie (3b), et les canaux (31a) de la première partie (3a) s'étendant dans une autre direction que celle des canaux (31) de la deuxième partie (3b), et l'élément de surface chauffante (3) respectif présentant une structure ondulée dotée de creux d'onde et de crêtes d'onde alternés, un creux d'onde étant relié respectivement à une crête d'onde suivante par le biais d'un flanc de l'élément de surface chauffante respectif, de manière à produire la structure ondulée, et l'élément de surface chauffante respectif étant brasé sur les deux tôles de séparation (4) parallèles respectives au niveau de ses points de contact formés par les crêtes d'onde et les creux d'onde.

10. Procédé de production d'un échangeur de chaleur à plaques (10) selon la revendication 9, **caractérisé en ce qu'**au moins les éléments de surface chauffante (2, 3) de l'échangeur de chaleur à plaques (10) ainsi qu'en particulier au moins un autre composant (4, 5, 6, 7, 8) sont formés, lors de l'impression 3D, par couches à partir d'une matière pulvérulente, en particulier comprenant un métal, en particulier de l'aluminium, plusieurs couches de la matière étant appliquées successivement les unes sur les autres, chaque couche étant, avant l'application de la couche suivante, chauffée au moyen d'un faisceau laser (21) dans une région prédéfinie qui correspond à une région de section transversale (30) de l'échangeur de chaleur à plaques à produire, et étant ainsi fixée à la couche sous-jacente, en particulier fusionnée avec celle-ci.
